# EUROPÄISCHE PATENTSCHRIFT

(11) **EP 1 837 623 B1**
(45) Veröffentlichungstag und Bekanntmachung des Hinweises auf die Patenterteilung: **01.10.2008**
(21) Anmeldenummer: 07004927.5
(22) Anmeldetag: 09.03.2007
(51) Int. Cl.: G01B 11/25

(54) **Verfahren und Vorrichtung zur Erfassung der Oberflächenform einer teilspiegelnden Oberfläche**
Method and device for recording the surface form of a partially reflective surface
Procédé et dispositif pour enregistrer la forme d'une surface partiellement réfléchissante

(30) Priorität: 17.03.2006 DE 102006012432
(43) Veröffentlichungstag der Anmeldung: 26.09.2007
(73) Patentinhaber: Fraunhofer-Gesellschaft zur Förderung der angewandten Forschung e.V., 80686 München (DE); Universität Karlsruhe (TH) Forschungsuniversität, 76131 Karlsruhe (DE)
(72) Erfinder: Balzer, Jonathan, Dipl.-Ing., 76131 Karlsruhe (DE); Werling, Stefan, Dipl.-Ing., 76770 Hatzenbühl (DE); Beyerer, Jürgen, Prof. Dr., 69234 Diehlheim (DE); Heizmann, Michael, Dr., 76131 Karlsruhe (DE)
(74) Vertreter: Rösler, Uwe

(56) Entgegenhaltungen:
- DE-A1- 10 217 068
- JP-A- 1 165 907
- PETZ MARCUS ET AL: "Reflection grating photogrammetry: A technique for absolute shape measurement of specular free-form surfaces" 2005, PROC SPIE INT SOC OPT ENG; PROCEEDINGS OF SPIE - THE INTERNATIONAL SOCIETY FOR OPTICAL ENGINEERING; OPTICAL MANUFACTURING AND TESTING VI 2005, VOL. 5869, PAGE(S) 1 - 12 , XP002430616 * das ganze Dokument *
- BALZER JONATHAN ET AL: "Regularization of the deflectometry problem using shading data" 2006, PROC SPIE INT SOC OPT ENG; PROCEEDINGS OF SPIE - THE INTERNATIONAL SOCIETY FOR OPTICAL ENGINEERING; TWO- AND THREE-DIMENSIONAL METHODS FOR INSPECTION AND METROLOGY IV 2006, VOL. 6382 , XP002430617 * das ganze Dokument *

## Beschreibung

### Technisches Gebiet

Die Erfindung bezieht sich auf ein Verfahren sowie eine Vorrichtung zur Erfassung der Oberflächenform einer optisch teilspiegelnden Oberfläche. Derartige Oberflächen weisen neben streuenden bzw. diffus reflektierenden auch optisch gerichtet reflektierende Anteile auf. Objekte mit optisch teilspiegelnden Oberflächen sind beispielsweise lackierte Blech- oder Kunststoffteile, wie sie bspw. im Automobilbereich Verwendung finden, oder keramische Oberflächen, um nur zwei Beispiele von einer Vielzahl möglicher Objekte mit teilspiegelnden Oberflächenbereichen zu nennen.

### Stand der Technik

Messverfahren zur Erfassung der Raumform von zumindest spiegelnd reflektierenden Oberflächen sind bekannt und vielfach in der Literatur beschrieben. Grundsätzlich basieren derartige optische Messverfahren auf dem wellenoptischen Modell und nutzen interferometrische Zusammenhänge oder basieren auf strahlenoptischen Ansätzen, bei denen die Reflexion einer bekannten Struktur bzw. eines bekannten optischen Musters, bspw. in Form eines Rechteck- oder Sinusgitters, an der zu vermessenden Oberfläche mittels eines Rasterreflexionsverfahrens, Reflexions-Moiré-Verfahrens oder mittels eines Videotopometers untersucht wird.

Ein nach dem Rasterreflexionsverfahren arbeitendes Messverfahren ist in einem Artikel von J. Beyerer und D. Pérard in "Automatische Inspektion spiegelnder Freiformflächen anhand von Rasterreflexionen", Technisches Messen 64, 1997 10,Seite 394 bis 400 beschrieben. Zur erfolgreichen Durchführung des Verfahrens gilt es, die Annahme bezüglich einer ausreichenden Glattheit der zu vermessenden Oberfläche zu treffen, um ein im Wege der Reflexionsmusterauswertung zu erhaltendes, die Oberflächengeometrie beschreibendes unterbestimmtes Differentialgleichungssystem auflösen zu können. Aufgrund dieser Modellannahme lässt sich das Verfahren nicht für die Vermessung komplexer Messobjekte unbekannter Geometrie zuverlässig und eindeutig anwenden.

In der EP 0 924 494 A2 ist ein Topometer zur Untersuchung und Vermessung spiegelnder Flächen beschrieben. Ein diffus streuendes Muster wird dergestalt über eine in Lage und Form bekannte, spiegelnde Oberfläche abgebildet, dass von einer Kamera gerade Streifen beobachtet werden. Ist der Abstand der spiegelnden Fläche zum Prüfsystem gegeben bzw. bekannt, so können Aussagen über die Abweichung der spiegelnden Fläche von ihrer Sollgestalt abgeleitet werden. Die Kenntnis über den Abstand zwischen spiegelnder Fläche und dem Prüfsystem hilft, die Unterbestimmtheit des zu lösenden Gleichungssystems zu überwinden.

In der DE 198 21 059 C2 werden ein Verfahren und Vorrichtung zur Erfassung von Formabweichungen an Objekten beschrieben. Hierbei wird eine Serie sinusförmiger Streifenmuster auf einem Schirm projiziert und die zu untersuchende Oberfläche relativ zu dem das jeweilige Streifenmuster auf die Oberfläche abbildenden Strahlengang in geeigneter Weise räumlich ausgerichtet, so dass letztlich durch Auswertung auftretender Musterverzerrungen sowie unter Zugrundelegung der aus der Interferometrie bekannten Phasenrekonstruktion ein Bild der Oberflächenneigung oder Oberflächenkrümmung erzeugt wird. Auch in diesem Fall ist die Kenntnis über den Abstand zwischen der zu vermessenden Oberfläche und dem Prüfsystem, das im einfachsten Fall aus einer ortsauflösenden Kamera, vorzugsweise einer CCD-Kamera, besteht, erforderlich.

In der DE 199 44 354 B4 werden ein Verfahren sowie eine Vorrichtung zur Ermittlung der Form oder der Abbildungseigenschaften von spiegelnden oder transparenten Objekten beschrieben. Vorzugsweise sinusförmige Muster werden über eine spiegelnde oder durch eine brechende Fläche beobachtet. Aus der Beobachtung der Deformation dieser Muster wird die lokale Oberflächenneigung berechnet. Das Verfahren wird als "Phasenmessende Deflektometrie" bezeichnet und wird ausführlicher in M. Knauer, J. Kaminski, G. Häusler, "Absolute Phasenmessende Deflektometrie", in DGaO-Proceedings, Onlinezeitschrift der Deutschen Gesellschaft für angewandte Optik, 2004 sowie in M. Knauer, J. Kaminski, G. Häusler, "Phase Measuring Deflectometry: a new approach to measure specular free-form surfaces", in Optical Metrology in Production Engineering, W. Osten und M. Takeda (Hrsg.), Bd. 5457, S. 366-376, Proc.SPIE, Strasbourg, France 2004, beschrieben. Auch in diesem Fall ist die Voraussetzung zur Oberflächenrekonstruktion die genaue Kenntnis des Abstands zwischen dem Objekt und der ortsauflösenden Kamera.

In der DE 100 014 964 C2 wird ein Verfahren zum optischen Messen der Form spiegelnder Oberflächen beschrieben. Das Verfahren wird als "Richtungskodierte Deflektometrie" ausführlicher in R. Seßner und G. Häußler, "Richtungscodierte Deflektometrie (RCD), in DGaO-Proceedings, Onlinezeitschrift der Deutschen Gesellschaft für angewandte Optik, 2004, beschrieben. Die Mehrdeutigkeit bei der Rekonstruktion der Oberfläche, die bei herkömmlichen Rasterreflexionsverfahren aufgrund der Abhängigkeit des von der Kamera aufgenommenen Musters einerseits von der lokalen Oberflächenneigung der zu vermessenden Oberfläche und andererseits vom Abstand zwischen der zu vermessenden Oberfläche und der Aufnahmekamera auftritt, wird in diesem Fall dadurch gelöst, dass die Beleuchtungsrichtung kodiert wird. Zur Richtungskodierung der Beleuchtung wird eine telezentrische Spezialoptik benötigt, durch die der Raum über der spiegelnden Oberfläche durch eine aktive Beleuchtung bezüglich der Intensität, der Beleuchtungswellenlänge und insbesondere bezüglich der Beleuchtungsrichtung eindeutig codiert wird.

In der DE 101 27 304 C2 werden ein Verfahren und eine Vorrichtung zur Bestimmung der dreidimensionalen Kontur einer spiegelnden Oberfläche eines Objekts beschrieben. Die Mehrdeutigkeit bei der Rekonstruktion der Oberfläche wird in diesem Fall dadurch gelöst, indem zwei beleuchtete Rastermuster an unterschiedlichen und bekannten Positionen angeordnet werden. Das Verfahren beruht auf der Beobachtung von Beleuchtungsmustern auf Schirmen mit unterschiedlichen Positionen bei jeweils feststehender Kamera.

In der DE 102 17 068 A1 wird ein Verfahren beschrieben, dass zur Bestimmung von Oberflächenpunkten und den dortigen Normalen sowohl spiegelnde als auch diffuse Reflexion der Oberfläche voraussetzt und ausnutzt. Dabei wird zunächst eine Messung nach einem herkömmlichen Rasterreflexionsverfahren durchgeführt. Zusätzlich wird nun auf die Objektoberfläche eine strukturierte Beleuchtung aufgebracht, die beispielsweise mittels eines Triangulationsansatzes zur Bestimmung von Oberflächenpunkten verwendet wird. Der gesuchte Punkt der Oberfläche ergibt sich als Schnittpunkt des Kamera-Sichtstrahls und des Beleuchtungsstrahls der strukturierten Beleuchtung; die gesuchte Oberflächennormale ergibt sich aus der Winkelhalbierenden zwischen der Geraden durch den Oberflächenpunkt und das optische Zentrum der Kamera und der Geraden durch den Oberflächenpunkt und das im Oberflächenpunkt gespiegelte Beleuchtungselement. Wesentlich an diesem Ansatz ist die Verwendung einer strukturierten Beleuchtung als zusätzliche Beleuchtungsquelle.

Überdies ist eine Vielzahl so genannter deflektometrischer Verfahren für spiegelnde Oberflächen bekannt. Diese lassen sich einteilen in Verfahren, die eine Oberflächenrekonstruktion leisten, und in solche, die nur die lokalen Krümmungseigenschaften der spiegelnden Fläche evaluieren. Verfahren, die eine Oberflächenrekonstruktion leisten, lassen sich weiterhin einteilen in Verfahren mit mehreren Aufnahmepositionen (Stereomethoden), Minimierungsverfahren und Verfahren, die lokale, parametrisierte Oberflächenmodelle benutzen.

In dem Beitrag von M. Petz und R. Tutsch, "Rasterreflexions-Photogrammetrie zur Messung spiegelnder Oberflächen", Technisches Messen 71, S 389-397, 2004 wird ein Verfahren als "passive Rasterreflexions-Photogrammetrie" bezeichnet, bei dem ein spiegelndes Objekt aus zwei unterschiedlichen Kamerapositionen beobachtet wird. Ein ähnliches Verfahren wird von Bonfort und Sturm in "Voxel Carving for Specular Surfaces", Techn. Ber., MOVI-GRAVIR-INRIA, Grenoble, France, 2003, als "Voxel Carving" bezeichnet.

In einem weiteren Beitrag von M. Petz und R. Tutsch, "Reflection grating photogrammetry: a technique for absolute shape measurement of specular free-form surfaces", Proceedings of SPIE, Band 5869, Seiten 1-12, wird darüber hinaus ein Verfahren beschrieben, das als "aktive Rasterreflexions-Photogrammetrie" bezeichnet wird. Hierbei wird ein Muster, das auf einem linear, in Richtung des Objektes beweglichen LCD-Display erzeugt wird, an der Oberfläche des spiegelnden Objekts gespiegelt. Das sich verändernde Spiegelbild wird aus einer Kameraposition beobachtet.

### Darstellung der Erfindung

Der Erfindung liegt die Aufgabe zugrunde, ein Verfahren zur Erfassung der Oberflächenform einer optisch teilspiegelnden Oberfläche, das nach dem Prinzip der Rasterreflektometrie arbeitet, bei dem über die zu untersuchende Oberfläche wenigstens ein Lichtmuster abgebildet wird, das an der Oberfläche zumindest teilweise gerichtet reflektiert wird, wobei gerichtet reflektierte Lichtanteile mit Hilfe wenigstens einer bildgebenden bzw. ortsauflösenden Sensoreinheit detektiert und im Wege einer Bildauswertung zu Zwecken einer Oberflächenformrekonstruktion ausgewertet wird, derart weiterzubilden, dass ohne die Messmöglichkeiten einschränkende Modellannahmen treffen zu müssen, die Raumform beliebig geformter Oberflächen erfassbar sein soll und dies mit einer Messgenauigkeit, die nur durch das Auflösungsvermögen der verwendeten bildgebenden bzw. ortsauflösenden Sensoreinheit begrenzt ist. Ferner soll das Verfahren ohne Kenntnis des Abstandes zwischen der zu vermessenden Oberfläche und der bildgebenden Sensoreinheit in der vorstehend wunschgemäßen Weise durchführbar sein. Ferner soll eine entsprechende Vorrichtung angegeben werden.

Die Lösung der der Erfindung zugrunde liegenden Aufgabe ist im Anspruch 1 angegeben. Gegenstand der Ansprüche 15 und 16 ist eine lösungsgemäße Vorrichtung. Den Erfindungsgedanken vorteilhaft weiterbildende Merkmale sind Gegenstand der Unteransprüche und insbesondere aus der Beschreibung unter Bezugnahme auf die Beschreibung der Ausführungsbeispiele zu entnehmen.

Lösungsgemäß zeichnet sich das Verfahren gemäß dem Oberbegriff des Anspruches 1 dadurch aus, dass in einem weiteren Verfahrensschritt gestreute oder diffus reflektierte Lichtanteile einer die Oberfläche weitgehend homogen ausleuchtenden Lichtquelle detektiert und ausgewertet werden.

Der besondere Vorteil des lösungsgemäßen Verfahrens ist neben der geforderten hohen Auflösung, die lediglich durch das Auflösungsvermögen der verwendeten bildgebenden Sensoreinheit begrenzt ist, die eindeutige Oberflächenrekonstruktion basierend lediglich auf einer einzigen Bildaufnahmekonfiguration: Weder sind eine zweite Blickrichtung der Sensoreinheit noch Bewegungen der Beleuchtungseinrichtung erforderlich, um das Problem der Mehrdeutigkeit, die der Rasterreflektometrie wie eingangs erläutert anhaftet, zu lösen.

So basiert das lösungsgemäße Verfahren auf zwei Grundideen, erstens leistet es eine Entkopplung der deflektometrischen Messempfindlichkeit bezüglich des Gradienten an einem zu vermessenden Oberflächenpunkt von dessen Lage und zweitens wird die natürliche Schlechtgestelltheit des Deflektometrieproblems bei teilspiegelnden Oberflächen durch Anwendung bekannter "Shape from Shading"-Techniken, siehe B. Horn und M. Brooks (Hrsg.), "Shape from Shading", The MIT Press, 1989, kompensiert. Der mathematische Terminus Schlechtgestelltheit" bezeichnet in diesem Zusammenhang die dem Rasterreflexionsverfahren angeborene Mehrdeutigkeit, deren Elimination im Mittelpunkt aller bisherigen bekannten Lösungsvorschläge steht.

Das lösungsgemäße Verfahren sieht zunächst vor, wie dies auch bei einer Vielzahl vergleichbarer, auf dem Rasterreflexionsprinzip beruhenden Verfahren der Fall ist, die zu untersuchende, teilspiegelnde Oberfläche vorzugsweise mit einer Sequenz unterschiedlicher Lichtmuster zu beleuchten, wodurch an der teilspiegelnden Oberfläche gerichtet reflektierte Lichtstrahlen hervorgerufen werden, die von wenigstens einer bildgebenden bzw. ortsauflösenden Sensoreinheit detektiert und seitens der Bildauswerteeinheit ausgewertet werden.
Bei der Bildauswertung der einzelnen kodierten bzw. strukturierten Beleuchtungssequenzen wird eine Korrespondenz zwischen Gegenstandspunkten und Bildpunkten hergestellt, wobei mit dem Begriff "Gegenstand" nicht das Objekt selbst, d.h. die teilspiegelnde Oberfläche, gemeint ist, sondern der über die teilspiegelnde Oberfläche betrachtete Musterzeuger, bspw. in Form eines das Lichtmuster erzeugenden Flachbildschirmes. Maßgeblich ist die Einführung der so genannten Deflektanz, die die Richtung des über die teilspiegelnde Oberfläche gesehenen Reflexauslösers, also die das Lichtmuster erzeugend Lichtquelle in Form eines Bildschirmes, in Abhängigkeit vom Gradientenvektor des teilspiegelnden Oberflächenpunkts. Als Ergebnis wird eine zur Beschreibung der Oberfläche unterbestimmte partielle Differentialgleichung erhalten, zu deren Lösung zusätzliche Informationen fehlen.

In einem zweiten Verfahrensschritt regt die Lichtquelle, die als homogener Strahler Licht emittiert, bspw. durch flächenhomogene Lichtabstrahlung bei Verwendung der bereits vorstehend erwähnten flächig ausgebildeten Lichtquelle, die auch zur Lichtmustererzeugung dient, oder als Punktlichtquelle ausgebildet ist, vorzugsweise in Abhängigkeit der Einstrahlrichtung auf die teilspiegelnde Oberfläche, das diffuse Reflexionsvermögen, die so genannte Reflektanz, der Oberfläche an. Diese ist proportional zum gemessenen Helligkeitswert des entsprechenden Bildpunkts.

Besonders einfach ist die Lösung für eine Punktlichtquelle. Für alle Oberflächenpunkte, außer denjenigen, die für die Lichtquelle die Reflexionsbedingungen erfüllen, werden auf diese Weise unabhängige Informationen über die Oberflächensteigung gewonnen. Der durch zwei Parameter hinreichend beschriebene Gradientenvektor kann nun mit Hilfe der beiden Ergebniswerte, in Form zweier partieller Differentialgleichungen, von Deflektanz und Reflektanz eindeutig bestimmt werden.

Aufgrund der vorstehend beschriebenen Entkopplung der Messempfindlichkeit bezüglich Gradient und Lage eines zu vermessenden Oberflächenpunktes verbleibt nach Bestimmung des Gradienten eine geometrisch optische Reflexionsbedingung. Diese dient schließlich zur punktweisen Berechnung der Oberflächenentfernung vom optischen Zentrum der bildgebenden bzw. ortsauflösenden Sensoreinheit bspw. in Form einer CCD-Kamera.

Das lösungsgemäße Verfahren, wie vorstehend beschrieben, ermöglicht die Beibehaltung einer fest vorgegebenen Messsituation ohne die Notwendigkeit, einzelne, für die Messung erforderliche Komponenten räumlich zu bewegen.

Eine für die Durchführung des Verfahrens lösungsgemäß ausgebildete Vorrichtung zur Erfassung einer Oberflächenform einer optisch teilspiegelnden Oberfläche mit einer Lichtquelle, mit der wenigstens ein Lichtmuster erzeugbar ist, einer bildgebenden bzw. ortsauflösenden Sensoreinheit sowie mit einer Bildauswerteeinheit, in der die mittels der einen Sensoreinheit detektierten Bildsignale zur Beurteilung räumlicher Oberflächeneigenschaften der teilspiegelnden Oberfläche ausgewertet werden, wobei als Lichtquelle eine flächige Lichtquelle zur Darstellung frei programmierbarer Lichtmuster vorgesehen ist, die direkt oder mittels einer optischen Abbildungseinheit auf die teilspiegelnde Oberfläche zu Zwecken einer Deflektanzmessung und Erzeugung gerichtet reflektierter Lichtstrahlen abgebildet werden, zeichnet sich dadurch aus, dass die flächige Lichtquelle zur Durchführung einer Reflektanzmessung in einen Modus homogener Flächenbeleuchtung umgeschaltet wird.

Eine ebenfalls für die Durchführung des Verfahrens lösungsgemäß ausgebildete Vorrichtung zur Erfassung einer Oberflächenform einer optisch teilspiegelnden Oberfläche mit einer Lichtquelle, mit der wenigstens ein Lichtmuster erzeugbar ist, einer bildgebenden bzw. ortsauflösenden Sensoreinheit sowie mit einer Bildauswerteeinheit, in der die mittels der einen Sensoreinheit detektierten Bildsignale zur Beurteilung räumlicher Oberflächeneigenschaften der teilspiegelnden Oberfläche ausgewertet werden, wobei als Lichtquelle eine flächige Lichtquelle zur Darstellung frei programmierbarer Lichtmuster vorgesehen ist, die direkt oder mittels einer optischen Abbildungseinheit auf die teilspiegelnde Oberfläche zu Zwecken einer Deflektanzmessung und Erzeugung gerichtet reflektierter Lichtstrahlen abgebildet werden, zeichnet sich dadurch aus, dass zur Durchführung einer Reflektanzmessung eine Punktlichtquelle vorgesehen ist, die eine weitgehend homogene Ausleuchtung der teilspiegelnden Oberfläche bewirkt.

Vorzugsweise ist die flächige Lichtquelle als ein ansteuerbarer, selbst leuchtender Bildschirm ausgebildet, etwa in Art eines LCD- oder Plasmabildschirmes. Selbstverständlich eignen sich alle alternativen Bildschirmtechniken zur Darstellung beliebig konfigurierbarer Lichtmuster, die geeignet sind, an der teilspiegelnden Oberfläche gerichtet reflektierende Strahlen zur erzeugen.

Alternativ eignet sich zur Lichtmustererzeugung auch ein diffus reflektierender Schirm oder eine Mattscheibe, auf die mit einer frei programmierbaren, wenigstens ein Lichtmuster erzeugenden Lichtquelle, vorzugsweise in Form eines Datenprojektors oder eines Beamers, das Lichtmuster projiziert werden kann, um es nachfolgend auf die teilspiegelnde Oberfläche abzubilden.

Zur Durchführung der Deflektanzmessung wird bevorzugt eine Serie unterschiedlicher Lichtmuster von der Lichtquelle erzeugt und auf die teilspiegelnde Oberfläche abgebildet. Erfordern bestimmte Anwendungen, so beispielsweise eine Oberflächenformbestimmung an bewegten Objekten, eine möglichst kurze Messzeit, so ist es gleichsam möglich eine Vielzahl unterschiedlicher Lichtmuster zugleich, d.h. simultan, oder in zeitlicher Überlappung zu generieren. Zur Gewährleistung ihrer selektiven Detektion durch die wenigstens eine Sensoreinheit, vorzugsweise durch eine entsprechende Vielzahl von Sensoreinheiten, werden die Lichtmuster mit spektral unterschiedlichen Wellenlängen oder unterschiedlichen Polarisationen erzeugt. Entsprechend bedarf es detektorseitig eine selektive Detektion der einzelnen Lichtmuster durch Vorsehen geeigneter Spektral- und/oder Polarisationsfilter.

Neben der räumlichen Oberflächenformrekonstruktion dient das lösungsgemäße Verfahren auch zur qualitativen Detektion und Bewertung von räumlichen Oberflächeneigenschaften, bspw. Reflektanzinhomogenitäten.

## Patentansprüche

1. Verfahren zur Erfassung einer Oberflächenform einer optisch teilspiegelnden Oberfläche, das nach dem Prinzip der Rasterreflektometrie arbeitet, bei dem über die zu untersuchende Oberfläche wenigstens ein Lichtmuster abgebildet wird, das an der Oberfläche zumindest teilweise gerichtet reflektiert wird, wobei gerichtet reflektierte Lichtanteile mit Hilfe wenigstens einer bildgebenden bzw. ortsauflösenden Sensoreinheit detektiert und im Wege einer Bildauswertung ausgewertet werden, **dadurch gekennzeichnet, dass** in einem weiteren Verfahrensschritt gestreute oder diffus reflektierte Lichtanteile einer die Oberfläche weitgehend homogen ausleuchtenden Lichtquelle detektiert und ausgewertet werden.

2. Verfahren nach Anspruch 1,
**dadurch gekennzeichnet, dass** die gerichtet reflektierten Lichtanteile im Wege einer rasterreflektometrischen Deflektanzmessung erzeugt werden, bei der über die Oberfläche wenigstens ein Lichtmuster abgebildet wird.

3. Verfahren nach Anspruch 1 oder 2,
**dadurch gekennzeichnet, dass** wenigstens zwei vorzugsweise ein Vielzahl in Form einer Serie unterschiedlicher Lichtmuster über die Oberfläche abgebildet werden und die dadurch an der Oberfläche gerichtet reflektierten Lichtanteile erfasst und der Bildauswertung zugeführt werden.

4. Verfahren nach Anspruch 2 oder 3,
**dadurch gekennzeichnet, dass** bei der rasterreflektometrischen Deflektanzmessung an jedem von der Sensoreinheit auflösbaren Oberflächenbereich, im Weiteren als Oberflächenpunkt bezeichnet, von der Position der Sensoreinheit aus die Richtung zur Lichtquelle in Abhängigkeit von einem dem jeweiligen auflösbaren Oberflächenpunkt zuordenbaren Gradientenvektor erfasst wird

5. Verfahren nach einem der Ansprüche 1 bis 4,
**dadurch gekennzeichnet, dass** das wenigstens eine Lichtmuster mittels wenigstens einer flächigen Lichtquelle erzeugt wird.

6. Verfahren nach Anspruch 5,
**dadurch gekennzeichnet, dass** als flächige Lichtquelle ein ansteuerbarer, selbst leuchtender Bildschirm eingesetzt wird.

7. Verfahren nach einem der Ansprüche 1 bis 4,
**dadurch gekennzeichnet, dass** das wenigstens eine Lichtmuster mittels wenigstens eines diffus reflektierenden Schirms oder einer Mattscheibe derart erzeugt wird, dass der Schirm oder die Mattscheibe mit einer frei programmierbaren, wenigsten ein Lichtmuster erzeugenden Lichtquelle, vorzugsweise in Form eines Datenprojektors oder eines Beamers beleuchtet wird.

8. Verfahren nach einem der Ansprüche 1 bis 7,
**dadurch gekennzeichnet, dass** zur homogenen Beleuchtung der Oberfläche eine Punktlichtquelle verwendet wird.

9. Verfahren nach einem der Ansprüche 1 bis 7,
**dadurch gekennzeichnet, dass** zur homogenen Beleuchtung der Oberfläche mehrere Punktlichtquellen vorgesehen werden.

10. Verfahren nach einem der Ansprüche 1 bis 9,
**dadurch gekennzeichnet, dass** die Detektion der an der Oberfläche gerichtet reflektierten Lichtanteile zeitlich getrennt oder simultan von der Detektion der an der Oberfläche gestreuten oder diffus reflektierten Lichtanteile vorgenommen wird.

11. Verfahren nach einem der Ansprüche 3 bis 10,
**dadurch gekennzeichnet, dass** die Serie unterschiedlicher Lichtmuster sequentiell nacheinander auf die Oberfläche abgebildet werden.

12. Verfahren nach einem der Ansprüche 3 bis 10,
**dadurch gekennzeichnet, dass** die Serie unterschiedlicher Lichtmuster simultan oder in zeitlicher Überlappung auf die Oberfläche abgebildet wird, wobei die Lichtmuster mittels unterschiedlicher spektraler oder polarisierter Beleuchtung erzeugt und mittels entsprechender Filter im Strahlengang vor der wenigstens einen Sensoreinheit zu Selektion der Lichtmuster detektiert werden.

13. Verfahren nach einem der Ansprüche 1 bis 12,
**dadurch gekennzeichnet, dass** die Bildauswertung zum Zwecke einer qualitativen Detektion und Bewertung von räumlichen Oberflächeneigenschaften durchgeführt wird.

14. Verfahren nach einem der Ansprüche 1 bis 12,
**dadurch gekennzeichnet, dass** die Bildauswertung zum Zwecke der Rekonstruktion der räumlichen Gestalt der Oberfläche durchgeführt wird.

15. Vorrichtung zur Erfassung einer Oberflächenform einer optisch teilspiegelnden Oberfläche mit einer Lichtquelle, mit der wenigstens ein Lichtmuster erzeugbar ist, einer bildgebenden bzw. ortsauflösenden Sensoreinheit sowie mit einer Bildauswerteeinheit, in der die mittels der Sensoreinheit detektierten Bildsignale zur Beurteilung räumlicher Oberflächeneigenschaften der teilspiegelnden Oberfläche ausgewertet werden, wobei als Lichtquelle eine flächige Lichtquelle zur Darstellung frei programmierbarer Lichtmuster vorgesehen ist, die direkt oder mittels einer optischen Abbildungseinheit auf die teilspiegelnde Oberfläche zu Zwecken einer Deflektanzmessung und Erzeugung gerichtet reflektierter Lichtstrahlen abgebildet werden,
**dadurch gekennzeichnet, dass** die flächige Lichtquelle zur Durchführung einer Reflektanzmessung in einen Modus homogener Flächenbeleuchtung umgeschaltet wird.

16. Vorrichtung zur Erfassung einer Oberflächenform einer optisch teilspiegelnden Oberfläche mit einer Lichtquelle, mit der wenigstens ein Lichtmuster erzeugbar ist, einer bildgebenden bzw. ortsauflösenden Sensoreinheit sowie mit einer Bildauswerteeinheit, in der die mittels der Sensoreinheit detektierten Bildsignale zur Beurteilung räumlicher Oberflächeneigenschaften der teilspiegelnden Oberfläche ausgewertet werden, wobei als Lichtquelle eine flächige Lichtquelle zur Darstellung frei programmierbarer Lichtmuster vorgesehen ist, die direkt oder mittels einer optischen Abbildungseinheit auf die teilspiegelnde Oberfläche zu Zwecken einer Deflektanzmessung und Erzeugung gerichtet reflektierter Lichtstrahlen abgebildet werden,
**dadurch gekennzeichnet, dass** zur Durchführung einer Reflektanzmessung wenigstens eine Punktlichtquelle vorgesehen ist, die eine weitgehend homogene Ausleuchtung der teilspiegelnden Oberfläche bewirkt.

## Claims

1. A method for determining a surface shape of a surface that is in part optically reflective, wherein said method operates in accordance with the principle of grid reflectometry, in which at least one light pattern is projected over the surface to be examined and at least partially reflected on the surface in a directional fashion, wherein light portions that are directionally reflected are detected with the aid of at least one imaging or spatial sensor unit and evaluated in the way of an image evaluation,
**characterized in that** scattered or diffusely reflected light portions of a light source that illuminates the surface in a largely homogeneous fashion are detected and evaluated.

2. The method according to Claim 1,
**characterized in that** the directionally reflected light portions are produced in the way of a grid-reflectometric deflectance measurement, in which at least one light pattern is projected over the surface.

3. The method according to Claim 1 or 2,
**characterized in that** at least two different light patterns, preferably a multitude of light patterns in the form of a series of different light patterns, are projected over the surface and the light portions that are thusly reflected in a directional fashion on the surface are detected and fed to the image evaluation.

4. The method according to Claim 2 or 3,
**characterized in that** the direction to the light source is determined from the position of the sensor unit during the grid-reflectometric deflectance measurement at each surface area that can be resolved by the sensor unit and is referred to as surface point below, namely in dependence on a gradient vector that can be assigned to the respective resolvable surface point.

5. The method according to one of Claims 1 to 4,
**characterized in that** the at least one light pattern is produced by means of at least one two-dimensional light source.

6. The method according to Claim 5,
**characterized in that** the two-dimensional light source used consists of a controllable, self-illuminated monitor.

7. The method according to one of Claims 1 to 4,
**characterized in that** at least one light pattern is produced by means of at least one diffusely reflecting screen or a ground glass screen in such a way that the screen or the ground glass screen is illuminated with a freely programmable light source that produces at least one light pattern and is preferably realized in the form of a data projector or a beamer.

8. The method according to one of Claims 1 to 7,
**characterized in that** a point light source is used for homogeneously illuminating the surface.

9. The method according to one of Claims 1 to 7,
**characterized in that** several point light sources are provided for homogeneously illuminating the surface.

10. The method according to one of Claims 1 to 9,
**characterized in that** the detection of the light portions that are directionally reflected on the surface is carried out separately of or simultaneously with the detection of the light portions that are scattered or diffusely reflected on the surface.

11. The method according to one of Claims 3 to 10,
**characterized in that** the series of different light patterns are sequentially projected on the surface in succession.

12. The method according to one of Claims 3 to 10,
**characterized in that** the series of different light patterns are projected on the surface simultaneously or with a time overlap, wherein the light patterns are produced by means of different spectral or polarized illumination and detected by means of corresponding filters in the beam path upstream of the at least one sensor unit in order to select the light pattern.

13. The method according to one of Claims 1 to 12,
**characterized in that** the image evaluation is carried out for the purpose of a qualitative detection and evaluation of three-dimensional surface properties.

14. The method according to one of Claims 1 to 12,
**characterized in that** the image evaluation is carried out for the purpose of the reconstruction of the three-dimensional shape of the surface.

15. A device for determining a surface shape of a surface that is in part optically reflective, with a light source that is able to produce at least one light pattern, an imaging or spatial sensor unit and an image evaluation unit, in which the image signals detected by means of the sensor unit are evaluated in order to assess three-dimensional surface properties of the partially reflective surface, wherein the light source used consists of a two-dimensional light source for illustrating freely programmable light patterns that are projected on the partially reflective surface directly or by means of an optical imaging unit for the purpose of a deflectance measurement and for the purpose of producing directionally reflected light beams,
**characterized in that** the two-dimensional light source is switched over into a mode of homogeneous surface illumination in order to carry out a reflectance measurement.

16. A device for determining a surface shape of a surface that is in part optically reflective, with a light source that is able to produce at least one light pattern, an imaging or spatial sensor unit and an image evaluation unit, in which the image signals detected by means of the sensor unit are evaluated in order to assess three-dimensional surface properties of the partially reflective surface, wherein the light source used consists of a two-dimensional light source for illustrating freely programmable light patterns that are projected on the partially reflective surface directly or by means of an optical imaging unit for the purpose of a deflectance measurement and for the purpose of producing directionally reflected light beams,
**characterized in that** at least one point light source is provided for carrying out a reflectance measurement, wherein said point light source causes a largely homogeneous illumination of the partially reflective surface.

## Revendications

1. Procédé de détection de la forme superficielle d'une surface partiellement réfléchissante du point de vue optique, qui fonctionne selon le principe de la réflectométrie à balayage, lors duquel il est reproduit sur la surface à analyser au moins un modèle lumineux, qui est réfléchi sur la surface en étant au moins partiellement orienté, des fractions de lumière réfléchies en étant orientées étant détectées à l'aide d'au moins une unité de capteurs donnant une image ou à résolution spatiale et évaluées par voie d'une évaluation d'image, **caractérisé en ce que** dans une étape de procédé suivante, des fractions de lumière dispersées ou réfléchies de façon diffuse d'une source lumineuse éclairant la surface de façon largement homogène sont détectées et évaluées.

2. Procédé selon la revendication 1,
**caractérisé en ce que** les fractions de lumière réfléchies en étant orientées sont générées par voie d'une mesure par réflectométrie à balayage de l'aptitude à la déflection, lors de laquelle au moins un modèle lumineux est reproduit par dessus la surface.

3. Procédé selon la revendication 1 ou 2,
**caractérisé en ce qu'**au moins deux, de préférence une pluralité de modèles lumineux différents sont reproduits sous la forme d'une série par-dessus la surface et **en ce que** les fractions de lumière réfléchies de ce fait en étant orientées sur la surface sont détectées et amenées vers l'évaluation d'image.

4. Procédé selon la revendication 2 ou 3,
**caractérisé en ce que** lors de la mesure par réflectométrie à balayage de l'aptitude à la déflection, sur chacune des régions superficielles susceptibles d'être restituées par l'unité de capteurs, ci-dessous appelées point superficiel, à partir de la position de l'unité de capteurs, la direction vers la source lumineuse est détectée en fonction d'un vecteur gradient affectable au point superficiel restituable concerné.

5. Procédé selon l'une quelconque des revendications 1 à 4,
**caractérisé en ce qu'**au moins un modèle lumineux est généré au moyen d'au moins une source lumineuse en nappe.

6. Procédé selon la revendication 5,
**caractérisé en ce qu'**on utilise en tant que source lumineuse en nappe un écran interrogeable, auto-lumineux.

7. Procédé selon l'une quelconque des revendications 1 à 4,
**caractérisé en ce que** le au moins un modèle lumineux est généré au moyen d'un écran à réflexion diffuse ou d'un verre dépoli, de sorte que l'écran ou le verre dépoli soit éclairé par une source lumineuse librement programmable, générant au moins un modèle lumineux, de préférence sous la forme d'un projecteur de données ou d'un beamer.

8. Procédé selon l'une quelconque des revendications 1 à 7,
**caractérisé en ce que** pour l'éclairage homogène de la surface, on utilise une source lumineuse ponctuelle.

9. Procédé selon l'une quelconque des revendications 1 à 7,
**caractérisé en ce que** pour l'éclairage homogène de la surface, plusieurs sources lumineuses ponctuelles sont prévues.

10. Procédé selon l'une quelconque des revendications 1 à 9,
**caractérisé en ce qu'**on procède à la détection des fractions de lumière réfléchies en étant orientées sur la surface de façon séparée dans le temps ou simultanément à la détection des fractions de lumière dispersées ou réfléchies de façon diffuse sur la surface.

11. Procédé selon l'une quelconque des revendications 3 à 10,
**caractérisé en ce que** la série de différents modèles lumineux est reproduite successivement de façon séquentielle sur la surface.

12. Procédé selon l'une quelconque des revendications 3 à 10,
**caractérisé en ce que** la série de différents modèles lumineux est reproduite simultanément ou avec un chevauchement dans le temps, les modèles lumineux étant générés au moyen d'un éclairage spectral différent ou polarisé et étant détectés pour la sélection des modèles lumineux au moyen de filtres correspondants dans la trajectoire du faisceau, à l'avant de la au moins une unité de capteurs.

13. Procédé selon l'une quelconque des revendications 1 à 12,
**caractérisé en ce que** l'évaluation d'images est réalisée à des fins d'une détection qualitative et d'une évaluation de caractéristiques tridimensionnelles de la surface.

14. Procédé selon l'une quelconque des revendications 1 à 12,
**caractérisé en ce que** l'évaluation d'images est réalisée à des fins de reconstruction de la conformation tridimensionnelle de la surface.

15. Dispositif de détection de la forme superficielle d'une surface partiellement réfléchissante du point de vue optique, avec une source lumineuse permettant de générer au moins un modèle lumineux, une unité de capteurs donnant une image ou à résolution spatiale, ainsi qu'avec une unité d'évaluation d'images, dans laquelle des signaux lumineux détectés au moyen de l'unité de capteurs sont évalués pour l'appréciation de caractéristiques tridimensionnelles superficielles de la surface partiellement réfléchissante, une source lumineuse en nappe étant prévue en tant que source lumineuse, pour la représentation de modèles lumineux librement programmables, qui sont reproduits directement ou au moyen d'une unité de reproduction optique sur la surface partiellement réfléchissante, à des fins d'une mesure de l'aptitude à la déflection et de la génération de faisceaux lumineux à réflexion orientée,
**caractérisé en ce que** la source lumineuse en nappe est commutée en un mode d'éclairage superficiel homogène, pour la réalisation d'une mesure de l'aptitude à la déflection.

16. Dispositif de détection de la forme superficielle d'une surface partiellement réfléchissante du point de vue optique, avec une source lumineuse permettant de générer au moins un modèle lumineux, une unité de capteurs donnant une image ou à résolution spatiale, ainsi qu'avec une unité d'évaluation d'images, dans laquelle des signaux lumineux détectés au moyen de l'unité de capteurs sont évalués pour l'appréciation de caractéristiques tridimensionnelles superficielles de la surface partiellement réfléchissante, une source lumineuse en nappe étant prévue en tant que source lumineuse, pour la représentation de modèles lumineux librement programmables, qui sont reproduits directement ou au moyen d'une unité de reproduction optique sur la surface partiellement réfléchissante, à des fins d'une mesure de l'aptitude à la déflection et de la génération de faisceaux lumineux à réflexion orientée,
**caractérisé en ce que** pour la réalisation d'une mesure de l'aptitude à la réflexion, il est prévu au moins une source lumineuse ponctuelle, qui provoque un éclairage largement homogène de la surface partiellement réfléchissante.
